# EUROPÄISCHE PATENTSCHRIFT

(11) **EP 2 643 111 B1**
(45) Veröffentlichungstag und Bekanntmachung des Hinweises auf die Patenterteilung: **26.08.2015**
(21) Anmeldenummer: 11801627.8
(22) Anmeldetag: 25.11.2011
(51) Int. Cl.: B22F 3/10, B22F 7/06, B22F 3/22, B23P 15/04

(54) **VERFAHREN ZUR HERSTELLUNG VON TRIEBWERKSBAUTEILEN MIT GEOMETRISCH KOMPLEXER STRUKTUR**
METHOD FOR PRODUCING ENGINE COMPONENTS WITH A GEOMETRICALLY COMPLEX STRUCTURE
PROCÉDÉ DE FABRICATION D'ÉLÉMENTS DE RÉACTEUR À STRUCTURE GÉOMÉTRIQUEMENT COMPLEXE

(30) Priorität: 25.11.2010 DE 102010061958
(43) Veröffentlichungstag der Anmeldung: 02.10.2013
(73) Patentinhaber: Rolls-Royce Deutschland Ltd & Co KG, 15827 Blankenfelde-Mahlow (DE)
(72) Erfinder: SCHULT, Alexander, 10437 Berlin (DE); ROTH-FAGARASEANU, Dan, 14532 Stahnsdorf (DE)
(74) Vertreter: Staroske, Sandro
(86) Internationale Anmeldenummer: PCT/EP2011/071048
(87) Internationale Veröffentlichungsnummer: WO 2012/069641

(56) Entgegenhaltungen:
- EP-A2- 1 801 352
- DE-A1- 10 053 199
- US-A- 5 487 773
- US-A1- 2007 202 000
- US-A1- 2009 196 761
- US-A1- 2009 304 497

## Beschreibung

Die Erfindung betrifft ein Verfahren zur Herstellung von thermisch beanspruchten Triebwerksbauteilen mit geometrisch komplexer Struktur durch Metallpulverspritzgießen von mit einem Binder vermischtem Metallpulver, bei dem einzelne Komponenten des Triebwerksbauteils als separat geformte Grünlings- und anschließend entbinderte Bräunlingsteilstücke gefertigt werden, die zu einem zwei- oder mehrteiligen Bräunling zusammengesetzt und in zusammengesetztem Zustand gesintert werden.

Es ist bekannt, Bauteile mit hoher geometrischer Komplexität aus unterschiedlichen Metallen wie beispielsweise Edelstählen, Einsatz- und Vergütungsstählen, intermetallischen Phasen, Leichtmetallen auf Titanbasis und dgl. durch Metallpulverspritzgießen (Metal Injection Moulding - MIM) herzustellen, und zwar bei vollständiger Materialausnutzung und ohne oder nur mit geringer Nacharbeit. Beim Metallpulverspritzgießen wird zunächst ein Metallpulver mit einem Binder aus thermoplastischen Kunststoffen und Wachsen zu einem fließfähigen und in einem Spritzgießprozess verarbeitbaren Werkstoff (Feedstock) vermischt. Aus dem beim Spritzgießen erzeugten Formteil, dem Grünling, wird anschließend der Binder herausgelöst oder thermisch ausgetrieben, so dass ein poröses - als Bräunling bezeichnetes - Formteil zur Verfügung steht, das die gleichen Abmessungen wie der Grünling hat. In einem darauffolgenden Wärmeprozess wird der Bräunling geringfügig unterhalb der Schmelztemperatur des jeweiligen Metalls in einem Sinterofen, und zwar meist in einer Schutzgasatmosphäre oder manchmal auch im Vakuum, gesintert. Nach dem Sintern, bei dem der Bräunling auf die gewünschten Fertigabmessungen schwindet, liegt das endgültige Formteil vor. Eine Nacharbeit ist im allgemeinen nicht erforderlich.

Aus der DE 103 31 397 A1 ist es bereits bekannt, geometrisch kompliziert geformte Bauteile für eine Fluggasturbine, hier einzelne, jeweils aus zwei oder mehreren Leitschaufeln sowie einem Innendeckbandabschnitt und einem Außendeckbandabschnitt bestehende Segmente eines Leitschaufelkranzes, durch Metallpulverspritzgießen herzustellen. Bei diesem Verfahren werden die Innen- und Außendeckbandabschnitte jeweils separat als Bräunling vorgefertigt und anschließend ohne Schrumpfung vorgesintert. Die vorgesinterten Schaufel- und Deckbandbräunlinge werden dann zu einem Leitschaufelsegment zusammengesetzt und in der zusammengesetzten Lage durch Klammern zueinander fixiert und dann gesintert. Ein zur Herstellung einer festen Verbindung zwischen den einzelnen Bauteilen erforderlicher inniger Kontakt an den Berührungsflächen ist durch die Anordnung von Klammern nicht gewährleistet. Aufgrund der durch die Fixierung mittels Klammern eingeschränkten Bewegungsfreiheit beim Sintern kann es zudem zu unerwünschten Deformationen und Rissen an dem zusammengesetzten Leitschaufelsegment kommen.

Die US 2007/0202000 A1 beschreibt ein Verfahren zur Verbindung zweier durch Metallpulverspritzgießen hergestellter Komponenten, bei dem die beiden zu verbindenen Komponenten beim Sintern eine unterschiedliche Schwindung aufweisen. Die beiden Komponenen weisen formschlüssig ineinandergreifende Vorsprünge bzw. Ausnehmungen auf. Beim Sintern übt diejenige Komponente, die die Vorsprünge der anderen Komponente umschließt, auf diese Vorsprünge einen Druck aus. Die anschliessede Verbindung der beiden Komponenten wird primär über die Vorsprünge gewährleistet und ist dadurch auf eine relativ kleine Querschnittsfläche begrenzt (die Basisfläche der Vorsprünge) und damit auf eine relativ niedrige Verbindungsfestigkeit.

Der Erfindung liegt die Aufgabe zugrunde, ein Verfahren zum Metallpulverspritzgießen von geometrisch komplex geformten, aus separat vorgefertigten Bräunlingen zusammengesetzten Triebwerksbauteilen anzugeben, bei dem während des Sinterprozesses zwischen den aneinandergefügten Bräunlingen ein Nullspaltmaß gewährleistet ist und eine innige, feste Verbindung erzielt wird.

Erfindungsgemäß wird die Aufgabe mit einem Verfahren gemäß den Merkmalen des Patentanspruchs 1 gelöst.

Vorteilhafte Weiterbildungen der Erfindung sind Gegenstand der Unteransprüche.

Bei der Herstellung von thermisch beanspruchten Triebwerksbauteilen mit geometrisch komplizierter Struktur durch Metallpulverspritzgießen von mit einem Binder vermischtem Metallpulver, bei dem einzelne Komponenten des Bauteils als separat geformte Grünlings- und anschließend entbinderte Bräunlingsteilstücke gefertigt werden, die zu einem mehrteiligen Bräunling zusammengesetzt und in zusammengesetztem Zustand gesintert werden, weisen die Bräunlingsteilstücke im Sinterprozess eine in Abhängigkeit von der Art und Ausbildung des eingesetzten Metallpulvers unterschiedliche Schwindung auf. Beim Sintern des derart zusammengesetzten Bräunlings werden stärker schwindende Bräunlingsteilstücke selbsttätig an weniger stark schrumpfende Bräunlingsteilstücke gepresst, so dass immer ein Nullspaltmaß und eine innige Verbindung zwischen den Bräunlingsteilstücken gewährleistet ist und im Metallspritzgießprozess auch kompliziert geformte Triebwerksbauteile in hoher Qualität bereitgestellt werden können. Dabei ist vorgesehen, dass an den Fügeflächen der zu verbindenden Bräunlingsteilstücke mit unterschiedlicher Schwindung Verbindungselemente in Form von formschlüssig ineinandergreifenden Vorsprüngen und Ausnehmungen derart vorgesehen sind, dass das Bräunlingsteilstück, das Vorsprünge aufweist, beim Sintern des zusammengesetzten Bräunlings eine größere Schwindung erfährt als das Bräunlingsteilstück, das Ausnehmungen aufweist.

Die erfindungsgemäße Lösung bewirkt, dass beim Sintern des zusammengesetzten Bräunlings das Bräunlingsteilstück, das Ausnehmungen aufweist, zum Bräunlingsteilstück, das Vorsprünge aufweist, durch dessen schrumpfenden Vorsprünge hingezogen wird, wodurch die jeweiligen Kontaktflächen aneinandergepresst werden. Damit wird erreicht, dass ein hoher Druck und damit ein intensiver Oberflächenkontakt der beider Bräunlingsteilstücke nicht lediglich im Bereich der Vorsprünge und Ausnehmungen erreicht wird, sondern vielmehr entlang der gesamten Kontaktflächen, entlang derer die beiden Bräunlingsteilstücke aneinander anliegen. Die Bräunlingsteilstücke werden beim Sintern des zusammengesetzten Bräunlings mit anderen Worten großflächig an Flächen aneinandergepresst, die benachbart der Vorsprünge und Ausnehmungen an den Bräunlingsteilstücken ausgebildet sind. Es werden damit bei dem erfindungsgegmäßen Verfahren während des Sinterprozesses zwischen den aneinandergefügten Bräunlingen ein Nullspaltmaß zwischen den Kontaktflächen gewährleistet und eine innige, feste Verbindung erzielt.

Die unterschiedliche Schwindung beim Sintern aufgrund des jeweils eingesetzten Metallpulvers ist darüber hinaus insofern vorteilhaft, als bei der Auswahl des jeweiligen Metallpulvers auch die unterschiedliche thermische Beanspruchung bestimmter Bauteilbereiche berücksichtigt werden kann.

Die Querschnittsfläche der Vorsprünge und Ausnehmungen ist so ausgebildet, dass die Bräunlingsteilstücke beim Sintern des zusammengesetzten Bräunlings aneinandergezogen werden. Die Querschnittsfläche kann beispielsweise sich etwa schwalbenschwanzförmig verjüngend ausgebildet sein. In einer anderen Ausführungsvariante sind die Vorsprünge konvex gewölbt und die Ausnehmungen konkav gewölbt, beispielsweise in Form von kugelförmigen Vorsprüngen und Ausnehmungen. Auf diese Weise können auch nicht rotationssymmetrisch geformte Bräunlingsteilstücke ohne störende Hilfsmittel im Sinterprozess fest miteinander verbunden werden und kompliziert geformte, nicht rotationssymmetrische Triebwerksbauteile, wie beispielsweise mit Deckbändern ausgebildete Turbinenschaufeln, durch Metallpulverspritzgießen gefertigt werden.

Die Vorsprünge und Aussparungen werden vor dem Sintern beispielsweise durch Längsverschiebung oder Drehung der zu verbindenden Bräunlingseilstücke in formschlüssigen Eingriff gebracht.

Gemäß einer Ausführungsvariante der Erfindung sind die Flächen, an denen die Bräunlingsteilstücke beim Sintern des zusammengesetzten Bräunlings aneinandergezogen werden, im wesentlichen parallel zueinander angeordnet, was einschließt, dass sie eine gemeinsame Krümmung aufweisen.

Bei rotationssymmetrisch ausgebildeten Triebwerksbauteilen umfasst der zusammengesetzte Bräunling ein inneres Bräunlingsteilstück und ein dieses umschließendes äußeres Bräunlingsteilstück mit größerer Schwindung, das beim Sintern des zusammengesetzten Bräunlings auf das innere Bräunlingsteilstück geschrumpft wird.

Gemäß einer weiteren Ausgestaltung der Erfindung kann der zusammengesetzte Bräunling von einem separat erzeugten, als Werkzeug fungierenden und durch Metallpulverspritzgießen erzeugten zusätzlichen Bräunling mit größerer Schwindung umschlossen werden. Durch den so ergänzten zusammengesetzten Bräunling werden die für das Triebwerksbauteil erforderlichen Bräunlingsteilstücke während des Sinterns innig miteinander verbunden. Der als Werkzeug dienende zusätzliche Bräunling wird nach dem Sintern von dem fertigen Bauteil entfernt.

In einer Ausgestaltung der Erfindung ist vorgesehen, dass das stärker schwindende erste Bräunlingsteilstück ein äußeres Bräunlingsteilstück ist und das zweite Bräunlingsteilstück ein inneres Bräunlingsteilstück ist. Die Angaben "äußeres" und "inneres" beziehen sich dabei auf die Anordnung des hergestellten Triebwerksbauteils in einem Triebwerk.

Eine weitere Ausgestaltung der Erfindung sieht vor, dass die Art und Ausbildung des eingesetzten Metallpulvers von der Art und Größe der Metallpulverpartikel, den Metallpulverwerkstoff sowie dem verwendeten Binder abhängt. Unterschiedliche Metallpulver im Sinne der vorliegenden Erfindung liegen somit beispielsweise bereits dann vor, wenn der verwendete Binder unterschiedlich ist oder in unterschiedlichem Maße den verwendeten Metallpulverpartikeln hinzugefügt ist, selbst wenn diese die gleiche Größe und Art besitzen. Unterschiedliche Metallpulver im Sinne der vorliegenden Erfindung liegen natürlich beispielsweise auch dann vor, wenn die Metallpulverpartikel unterschiedlicher Größe und/oder Art sind.

Ein bevorzugtes Ausführungsbeispiel der Erfindung wird anhand der Zeichnung, in der
- Fig. 1: eine mit einem Innen- und einem Außendeckband ausgebildete Turbinenschaufel, die aus drei separat gefertigten Bräunlingsteilstücken zusammengesetzt ist; und
- Fig. 2: eine schematische Darstellung des Fügebereichs eines aus zwei Bräunlingsteilstücken zusammengesetzten Bräunlings
zeigt, näher erläutert.

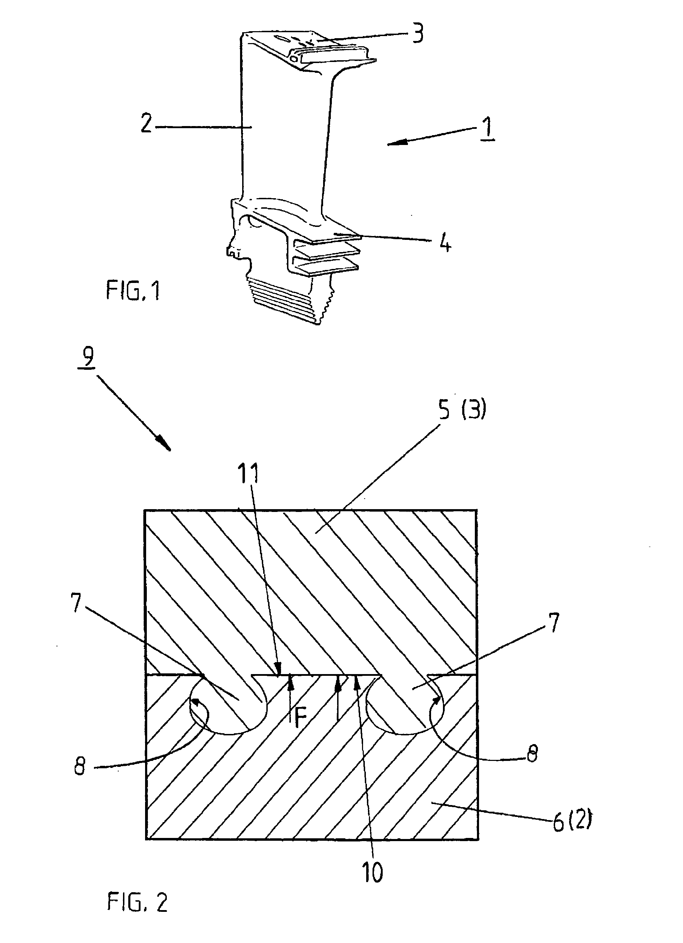

Fig. 1 zeigt am Beispiel einer mit einem Innen- und einem Außendeckband versehenen Turbinenschaufel ein nicht rotationssymmetrisch ausgebildetes Triebwerksbauteil 1, das aus drei separat durch Metallpulverspritzgießen gefertigten und anschließend in einem Sinterprozess gesinterten und miteinander verbundenen Bräunlingsteilstücken zusammengefügt ist. Die drei gesinterten Bräunlingsteilstücke bilden das Schaufelblatt 2 sowie ein Außendeckband 3 und ein Innendeckband 4 der Turbinenschaufel.

Zur Herstellung des nicht rotationssymmetrischen Triebwerksbauteils 1, hier einer Turbinenschaufel, werden durch Metallpulverspritzgießen eines mit einem thermoplastischen Binder vermischten Metallpulvers (Feedstock) separate Grünlinge der Außen- und Innendeckbänder und der Schaufelblätter erzeugt. Durch Herausschmelzen des Binders in einem Ofen werden die Grünlinge anschließend entbindert, so dass nunmehr aus einem porösen Material bestehende Bräunlingsteilstücke für das Schaufelblatt sowie die Innen- und Außendeckbänder zur Verfügung stehen.

Wie die in Fig. 2 dargestellte Fügestelle zwischen zwei separat gefertigten äußeren und inneren Bräunlingsteilstücken 5 und 6 zeigt, befinden sich an der Kontaktfläche 10 des äußeren Bräunlingsteilstücks 5, die der Innenfläche des Außendeckbandes 3 entspricht, sich zur Kontaktfläche 10 hin etwa schwalbenschwanzförmig verjüngende Vorsprünge 7 und an der Kontaktfläche 11 des inneren Bräunlingsteilstücks 6, die hier der Oberkante eines Schaufelblattes 2 entspricht, etwa schwalbenschwanzförmig verjüngende Ausnehmungen 8. In der gleichen Art ist auch ein weiteres - zur Ausbildung des Innendeckbandes 4 vorgesehenes - äußeres Bräunlingsteilstück (nicht dargestellt) mit derartigen Vorsprüngen versehen, die in an der Unterkante des inneren Bräunlingsteilstücks 6 ausgebildete Ausnehmungen (nicht dargestellt) eingreifen. Statt schwalbenschwanzförmig sich verjüngender Vorsprünge können alternativ auch in anderer Weise sich zur Kontaktfläche 10 hin verjüngende Vorsprünge realisiert sein.

Die beim Metallpulverspritzgießprozess erzeugten Verbindungselemente in Form von Vorsprüngen 7 und Ausnehmungen 8 greifen bei dem zusammengesetzten Bräunling 9 formschlüssig ineinander. Das äußere Bräunlingsteilstück 5 ist über die Art und Größe der Metallpulverpartikel, den Metallpulverwerkstoff sowie den verwendeten Binder so ausgebildet, dass er beim Sintern stärker schrumpft als das innere Bräunlingsteilstück 6. Das heißt, beim anschließenden gemeinsamen Sintern der mittels der Ausnehmungen 8 und Vorsprünge 7 formschlüssig miteinander verbundenen äußeren und inneren Bräunlingsteilstücke 5, 6 wird zum einen eine feste Verbindung zwischen den Ausnehmungen und den in diese eingreifenden Vorsprüngen geschaffen und das Nullspaltmaß zwischen den Fügeflächen 10, 11 aufrechterhalten.

Aufgrund der schwalbenschwanzförmigenförmigen Ausbildung der unterschiedlich schrumpfenden Verbindungselemente werden die beiden Bräunlingsteilstücke 5, 6 außerdem aneinandergezogen und aneinandergepresst, so dass eine innige Verbindung zwischen dem äußeren und inneren Bräunlingsteilstücken 5, 6 und im Ergebnis des Sinterprozesses ein durch Metallpulverspritzgießen und entsprechend der thermischen Belastung aus unterschiedlichen Werkstoffen gefertigtes Triebwerkbauteil von geometrisch komplizierter Struktur bereitgestellt werden kann. Dabei ziehen aufgrund des Umstandes, dass das äußere Bräunlingsteilstück 5 stärker schrumpft, die Vorsprünge 7 des Bräunlingsteilstück 5 das Bräunlingsteilstück 6 an das Bräunlingsteilstück 5 heran, wobei die jeweiligen Kontaktflächen 10, 11 aneinandergepresst werden. Die entsprechende Kraft, die auf das Bräunlingsteilstück 6 wirkt und zu einem Andrückdruck zwischen den beiden Bräunlingsteilstücken 5, 6 entlang der Kontaktflächen 10, 11 führt, ist in der Fig. 2 durch Pfeile F angedeutet.

Die Kontaktflächen 10, 11, die benachbart der Vorsprünge bzw. Aussparungen 7, 8 ausgebildet sind, sind dabei in einer Ausgestaltung im wesentlichen parallel ausgebildet, was mit einschließt, dass sie in gleicher Weise gekrümmte Flächen ausbilden. Hierdurch wird ein großflächiger intensiver Anpressvorgang beim Sintern sichergestellt.

Das zuvor geschilderte Ausführungsbeispiel war auf die Herstellung von nicht rotationssymmetrischen Bauteilen aus zwei (oder mehreren) mit Verbindungselementen ausgebildeten Bräunlingen mit jeweils unterschiedlichem Schwindungsverhalten gerichtet. In einem weiteren, nicht die Erfindung betreffenden Beispiel kann es ausgehend von dem Grundgedanken, die aneinanderzufügenden Bräunlinge durch deren unterschiedliche Schwindung aneinander zu pressen, bei rotationssymmetrischen Bauteilen auch ohne die erwähnten Verbindungselemente 7, 8 ausreichen, wenn ein das innere Bräunlingsteilstück umfassendes äußeres Bräunlingsteilstück eine stärkere Schwindung bzw. Schrumpfung aufweist, so dass die separat gefertigten, rotationssymmetrischen Bräunlingsteilstücke beim Sintern fest aneinander gepresst werden. Schließlich ist es auch denkbar, einen zusätzlichen, stärker schrumpfenden Bräunling als Werkzeug zu benutzen, der die zu verbindenden Bräunlingsteilstücke umfasst und beim gemeinsamen Sintern fest aneinander drückt.

### Bezugszeichenliste

- 1: Triebwerksbauteil
- 2: Schaufelblatt
- 3: Außendeckband
- 4: Innendeckband
- 5: äußeres Bräunlingsteilstück (Außendeckband)
- 6: inneres Bräunlingsteilstück (Schaufelblatt)
- 7: Vorsprung (Verbindungselement)
- 8: Ausnehmung (Verbindungselement)
- 9: zusammengesetzter Bräunling aus 5 und 6
- 10: Kontaktfläche des äußeren Bräunlingsteilstücks 5
- 11: Kontaktfläche des inneren Bräunlingsteilstücks 6

## Patentansprüche

1. Verfahren zur Herstellung von thermisch beanspruchten Triebwerksbauteilen (1) mit geometrisch komplexer Struktur durch Metallpulverspritzgießen von mit einem Binder vermischtem Metallpulver, bei dem einzelne Komponenten des Triebwerksbauteils als separat geformte Grünlings- und anschließend entbinderte Bräunlingsteilstücke (5, 6) gefertigt werden, die zu einem zwei- oder mehrteiligen Bräunling (9) zusammengesetzt und in zusammengesetztem Zustand gesintert werden, wobei die Bräunlingsteilstücke (5, 6) im Sinterprozess eine in Abhängigkeit von der Art und Ausbildung des eingesetzten Metallpulvers unterschiedliche Schwindung aufweisen, wobei beim Sintern des zusammengesetzten Bräunlings (9) mindestens ein stärker schwindendes erstes Bräunlingsteilstück (5) selbsttätig an mindestens ein zweites Bräunlingsteilstück (6) gepresst wird,
dadurch gekennzeichet,
dass an den Fügeflächen der zu verbindenden Bräunlingsteilstücke (5, 6) mit unterschiedlicher Schwindung Verbindungselemente in Form von formschlüssig ineinandergreifenden Vorsprüngen (7) und Ausnehmungen (8) derart vorgesehen sind, dass das Bräunlingsteilstück (5), das Vorsprünge (7) aufweist, beim Sintern des zusammengesetzten Bräunlings (9) eine größere Schwindung erfährt als das Bräunlingsteilstück (6), das Ausnehmungen (8) aufweist.

2. Verfahren nach Anspruch 1, **dadurch gekennzeichnet, dass** die ineinandergreifenden Vorsprünge (7) und Ausnehmungen (8) schwalbenschwanzförmig ausgebildet sind, wobei die Bräunlingsteilstücke (5, 6) beim Sintern des zusammengesetzten Bräunlings (9) aneinandergezogen werden.

3. Verfahren nach Anspruch 1, **dadurch gekennzeichnet, dass** die Vorsprünge (7) konvex gewölbt und die Ausnehmungen (8) konkav gewölbt sind, wobei die Bräunlingsteilstücke (5, 6) beim Sintern des zusammengesetzten Bräunlings (9) aneinandergezogen werden.

4. Verfahren nach einem der vorangehenden Ansprüche, **dadurch gekennzeichnet, dass** die Bräunlingsteilstücke (5, 6) beim Sintern des zusammengesetzten Bräunlings (9) an Kontaktflächen (11, 12) aneinandergepresst werden, die benachbart zu den Vorsprüngen (7) und Ausnehmungen (8) an den Bräunlingsteilstücken (5, 6) ausgebildet sind.

5. Verfahren nach Anspruch 4, **dadurch gekennzeichnet, dass** die Kontaktflächen (11, 12), an denen die Bräunlingsteilstücke (5, 6) beim Sintern des zusammengesetzten Bräunlings (9) aneinandergezogen werden, im wesentlichen parallel zueinander angeordnet sind.

6. Verfahren nach einem der vorangehenden Ansprüche, **dadurch gekennzeichnet, dass** bei rotationssymetrisch ausgebildeten Triebwerksbauteilen der zusammengesetzte Bräunling (9) ein inneres Bräunlingsteilstück (6) und ein dieses umschließendes äußeres Bräunlingsteilstück (5) mit größerer Schwindung sowie mit oder ohne Verbindungselemente umfasst, das beim Sintern des zusammengesetzten Bräunlings (9) an das innere Bräunlingsteilstück (6) gepresst wird.

7. Verfahren nach einem der vorangehenden Ansprüche, **dadurch gekennzeichnet, dass** der zusammengesetzte Bräunling (9) von einem separat erzeugten, als Werkzeug fungierenden zusätzlichen Bräunling mit größerer Schwindung umschlossen wird, wobei während des Sinterns die Bräunlingsteilstücke (5, 6) aneinandergepresst werden und der zusätzliche Bräunling nach dem Sintern entfernt wird.

8. Verfahren nach einem der vorangehenden Ansprüche, **dadurch gekennzeichnet, dass** das stärker schwindende erste Bräunlingsteilstück (5) ein äußeres Bräunlingsteilstück ist und das zweite Bräunlingsteilstück (6) ein inneres Bräunlingsteilstück ist.

9. Verfahren nach einem der vorangehenden Ansprüche, **dadurch gekennzeichnet, dass** die Art und Ausbildung des eingesetzten Metallpulvers von der Art und Größe der Metallpulverpartikel, dem Metallpulverwerkstoff sowie dem verwendeten Binder abhängt.

## Claims

1. Method for manufacturing thermally stressed engine components (1) having a geometrically complex structure by metal injection moulding of metal powder mixed with a binder, by which method individual parts of the engine component are produced as separately moulded green compact sections and then as debindered brown compact sections (5, 6) which are joined together to form a two-part or multi-part brown compact (9) and sintered in the assembled state, wherein the brown compact sections (5, 6) have differing shrinkage properties in the sintering process, depending on the type and structure of the metal powder used, wherein at least one more heavily shrinking first brown compact section (5) is automatically pressed against at least one second brown compact section (6) during sintering of the assembled brown compact (9),
**characterized in that**
connecting elements in the form of positively engaging projections (7) and recesses (8) are provided at the joining surfaces of the brown compact sections (5, 6) to be joined, said having differing shrinkage properties, in such a way that during sintering of the assembled brown compact (9), the brown compact section (5) with projections (7) undergoes a greater shrinkage than the brown compact section (6) with recesses (8).

2. Method according to Claim 1, **characterized in that** the engaging projections (7) and recesses (8) are configured dovetail-shaped design, with the brown compact sections (5, 6) being drawn against one another when sintering the assembled brown compact (9).

3. Method according to Claim 1, **characterized in that** the projections (7) have a convex curvature and the recesses (8) a concave curvature, with the brown compact sections (5, 6) being drawn against one another when sintering the assembled brown compact (9).

4. Method according to one of the preceding Claims, **characterized in that** when sintering the assembled brown compact (9), the brown compact sections (5, 6) are pressed against one another at contact surfaces (11, 12) provided adjacent to the projections (7) and recesses (8) on the brown compact sections (5, 6).

5. Method according to Claim 4, **characterized in that** the contact surfaces (11, 12), at which the brown compact sections (5, 6) are drawn against one another when sintering the assembled brown compact (9), are arranged substantially parallel to one another.

6. Method according to one of the preceding Claims, **characterized in that** in the case of rotationally symmetrical engine components the assembled brown compact (9) comprises an inner brown compact section (6) and an outer brown compact section (5) enclosing the former with greater shrinkage and with or without connecting elements, said outer brown compact section (5) being pressed onto the inner brown compact section (6) during sintering of the assembled brown compact (9).

7. Method according to one of the preceding Claims, **characterized in that** the assembled brown compact (9) is enclosed by an additional brown compact with greater shrinkage separately produced and acting as a tool, with the brown compact sections (5, 6) being pressed against one another during sintering and the additional brown compact being removed after sintering.

8. Method according to one of the preceding Claims, **characterized in that** the more heavily shrinking first brown compact section (5) is an outer brown compact section and the second brown compact section (6) is an inner brown compact section.

9. Method according to one of the preceding Claims, **characterized in that** the type and structure of the metal powder used depend on the type and size of the metal powder particles, on the metal powder material and on the binder used.

## Revendications

1. Procédé de fabrication d'éléments de moteur (1) thermiquement sollicités à structure géométrique complexe, par moulage par injection d'une poudre métallique mélangée à un liant, procédé dans lequel les différents composants de l'élément de moteur sont fabriqués en tant que morceaux de comprimé cru formés séparément puis en tant que morceaux de comprimé brun (5, 6) déliantés, lesquels sont assemblés pour obtenir un comprimé brun (9) en deux parties ou plus et sont frittés dans l'état assemblé, sachant que dans le processus de frittage, les morceaux de comprimé brun (5, 6) présentent un retrait différent en fonction de la nature et de la structure de la poudre métallique utilisée, que lors du frittage du comprimé brun (9) assemblé, au moins un premier morceau de comprimé brun (5) présentant un retrait plus important est automatiquement pressé sur au moins un deuxième morceau de comprimé brun (6),
**caractérisé en ce que**
sur les surfaces d'assemblage des morceaux de comprimé brun (5, 6) à relier présentant un retrait différent sont prévus des éléments de jonction sous forme de parties saillantes (7) et d'évidements (8) s'interpénétrant par complémentarité de forme, de manière telle que le morceau de comprimé brun (5) présentant des parties saillantes (7) subit lors du frittage du comprimé brun (9) assemblé un retrait plus important que celui du morceau de comprimé brun (6) présentant des évidements (8).

2. Procédé selon la revendication n° 1, **caractérisé en ce que** les parties saillantes (7) et les évidements (8) s'interpénétrant sont formés en queue d'aronde, les morceaux de comprimé brun (5, 6) étant joints l'un à l'autre lors du frittage du comprimé brun (9) assemblé.

3. Procédé selon la revendication n° 1, **caractérisé en ce que** les parties saillantes (7) présentent une courbure convexe et les évidements (8) une courbure concave, les morceaux de comprimé brun (5, 6) étant joints l'un à l'autre lors du frittage du comprimé brun (9) assemblé.

4. Procédé selon une des revendications précédentes, **caractérisé en ce que** lors du frittage du comprimé brun (9) assemblé, les morceaux de comprimé brun (5, 6) sont pressés l'un contre l'autre sur des surfaces de contact (11, 12) qui sont formées sur les morceaux de comprimé brun (5, 6) au voisinage des parties saillantes (7) et des évidements (8)

5. Procédé selon la revendication n° 4, **caractérisé en ce que** les surfaces de contact (11, 12), sur lesquelles les morceaux de comprimé brun (5, 6) sont joints l'un à l'autre lors du frittage du comprimé brun (9) assemblé, sont disposées pour l'essentiel parallèlement les unes aux autres.

6. Procédé selon une des revendications précédentes, **caractérisé en ce qu'**en présence d'éléments de moteur à symétrie de révolution, le comprimé brun (9) assemblé comprend un morceau de comprimé brun (6) intérieur et un morceau de comprimé brun (5) extérieur entourant ledit morceau de comprimé brun intérieur et présentant un retrait plus
important, ainsi qu'avec ou sans éléments de jonction, et qui est pressé sur le morceau de comprimé brun (6) intérieur lors du frittage du comprimé brun (9) assemblé.

7. Procédé selon une des revendications précédentes, **caractérisé en ce que** le comprimé brun (9) assemblé est entouré par un comprimé brun supplémentaire fabriqué séparément, présentant un retrait plus important et faisant office d'outil, sachant que les morceaux de comprimé brun (5, 6) sont pressés l'un contre l'autre pendant le frittage et que le comprimé brun supplémentaire est retiré après le frittage.

8. Procédé selon une des revendications précédentes, **caractérisé en ce que** le premier morceau de comprimé brun (5) présentant un retrait plus important est un morceau de comprimé brun extérieur, et que le deuxième morceau de comprimé brun (6) est un morceau de comprimé brun intérieur.

9. Procédé selon une des revendications précédentes, **caractérisé en ce que** la nature et la structure de la poudre métallique utilisée dépend de la nature et de la taille des particules de poudre métallique, du matériau de la poudre métallique ainsi que du liant utilisé.
